# EUROPÄISCHE PATENTANMELDUNG

(11) **EP 4 600 526 A1**
(43) Veröffentlichungstag der Anmeldung: **13.08.2025**
(21) Anmeldenummer: 25153255.2
(22) Anmeldetag: 22.01.2025
(51) Int. Cl.: F16G 1/12, F16G 11/02, B66B 7/08, B66F 9/00

(54) **BEFESTIGUNGSVORRICHTUNG UND GURTSEGMENT MIT EINER SOLCHEN BEFESTIGUNGSVORRICHTUNG**

(30) Priorität: 09.02.2024 DE 102024201212
(71) Anmelder: ContiTech Deutschland GmbH, 30175 Hannover (DE)
(72) Erfinder: Michalk, Jan, 30175 Hannover (DE); Franke, Martin, 30175 Hannover (DE); Schöffer, Jannis, 30175 Hannover (DE)
(74) Vertreter: Preusser, Andrea

(57) **Zusammenfassung**

Befestigungsvorrichtung (1) geeignet zur Anbindung eines Gurtsegments (2) an eine Maschine, aufweisend ein Verbindungselement (3) und eine Aufnahmevorrichtung (4), wobei das Verbindungselement (3) einen Absatz (7) und eine Klemmeinheit (8) aufweist, wobei die Klemmeinheit (8) mit zumindest einem Teil von Seilen (6) des Gurtsegments mittels Klemmung verbindbar ist, wobei die Aufnahmevorrichtung (4) zur formschlüssigen Aufnahme des Verbindungselements (3) ausgebildet ist, wobei die Aufnahmevorrichtung (4) mehrteilig ausgebildet ist und wenigstens zwei miteinander verbindbare Schalen aufweist, wobei die Innenkontur der Schalen die Außenkontur des Verbindungselements (3) aufweist, wobei die Schalen miteinander verbunden zur vollständigen formschlüssigen Aufnahme des Verbindungselements (3) ausgebildet sind.

## Beschreibung

Die Erfindung betrifft eine Befestigungsvorrichtung gemäß dem Oberbegriff des Anspruchs 1. Die Erfindung betrifft weiterhin ein Gurtsegment gemäß dem Oberbegriff des Anspruchs 3. Weiterhin betrifft die Erfindung einen Linearantrieb gemäß Anspruch 7 und einen Gabelstapler gemäß Anspruch 8.

Es sind seit langem Gurte oder Gurtsegmente bekannt, die zum Anheben oder Ziehen von Lasten verwendet werden. Hierzu können Gurte oder Gurtsegmente verwendet werden, die ein offenes Ende aufweisen, an dem die anzuhebende oder zu ziehende Last befestigt werden kann. Hier wird herkömmlicherweise das offene Ende des Gurtes oder Gurtsegments um einen Teil oder Teilbereich der Last wie z.B. einen Haken oder dergleichen als Schlaufe geführt.

Die Ausbildung der Schlaufe oder auch einer Lasche erfolgt dabei üblicherweise derart, dass das offene Ende des Gurtes oder Gurtsegments um den Haken oder dergleichen umgeklappt wird, sodass das offene Ende auf einem Teilbereich des Gurtes oder Gurtsegments aufliegt und dort die beiden Bereiche durch eine Klemmung aufeinandergepresst werden. Hierdurch wird eine kraftschlüssige Verbindung erzeugt.

Nachteilig ist hierbei, dass bei sehr vielen Anwendungsfällen der Gurt oder das Gurtsegment durch eine geschlossene Öffnung geführt werden muss und erst danach die Schlaufe ausgebildet werden kann. In diesen Fällen ist die Durchführung der Klemmverbindung, die die Last sicher tragen bzw. ziehen können muss, unter teilweise sehr engen und schlecht zugänglichen Umständen vorzunehmen. Dies erschwert und verteuert die Montage sowie erhöht das Risiko einer nicht ordnungsgemäß ausgeführten Klemmverbindung.

Die GB 1 063 303 A beschreibt ein Förderband mit einem flexiblen Gummielement und mit einem in Längsrichtung starren Endelement, das an jedem Ende davon angeordnet ist, wobei das Element durch eine Schicht aus länglichen parallelen gummibeschichteten Schnüren verstärkt ist, die innerhalb des Endelements gestaucht sind. Letztere bestehen aus starren Metall- oder Nylonsegmenten, die durch flexible Gummielemente getrennt und an diese gebunden sind. Die Segmente haben einen T-förmigen Querschnitt, der in Längsrichtung des Riemens gebohrt ist, um die Enden der Korde aufzunehmen. Eine Anordnung dieser Riemen wird gebildet, indem ein Endelement von jedem von zwei benachbarten Riemen in entgegengesetzte Seiten eines Verbindungselements geschoben wird. Letztere umfasst eine Vielzahl von starren Segmenten, die durch flexible Gummielemente getrennt und mit diesen verbunden sind. Jede Seite des Elements ist mit einer U-förmigen Nut ausgebildet, in die die T-förmigen Elemente gleiten.

Die GB 712 116 A beschreibt eine Befestigungsvorrichtung für ein Band mit einem oder mehreren Verstärkungssträngen aus beispielsweise Draht, eingebettet in einer Ummantelung aus elastischem flexiblem Material, wie Gummi, Balata oder einer plastifizierten Polyvinylzusammensetzung. Die Befestigungsvorrichtung umfasst männliche und weibliche Anschlusselemente an den Verstärkungssträngen an benachbarten Enden des Riemens befestigt. Das männliche Element umfasst eine Fassung zum Befestigen an dem Ende des Verstärkungsstrangs durch Gesenkschmieden oder Löten und einen viertelseitigen Schaft mit einem halbrunden Kopf. Das weibliche Element hat eine ähnliche Buchse, einen Schaft und einen Kopf, die in einem Gehäuse enthalten sind. Die Enden der Köpfe sowohl des männlichen als auch des weiblichen Elements haben abgeschrägte Oberflächen, die an den beiden zusammengeschobenen Elementen ineinandergreifen und die zwei Elemente relativ zueinander verdrehen, bis jeder Kopf hinter dem anderen zurückschnappt, weil die Stränge wieder einen normal entspannten Zustand annehmen, in dem sie zunächst zusammengebaut werden müssen. Somit können zwei Enden eines Riemens oder Längen eines Riemens mit gegenüberliegenden männlichen und weiblichen Anschlüssen schnell durch Zusammenpressen des männlichen und des weiblichen Elements verbunden werden.

Die EP 2 776 737 B1 betrifft einen offenen Gurt oder ein offenes Gurtsegment zum Anheben oder zum Ziehen von Lasten, mit im Wesentlichen in Längsrichtung des offenen Gurtes oder des offenen Gurtsegments verlaufenden, im Wesentlichen parallel zueinander angeordneten Stahlseilen, wobei der offene Gurt oder das offene Gurtsegment wenigstens ein offenes Ende mit einer Befestigungsvorrichtung aufweist, welche mit zumindest einem Teil der Stahlseile mittels Klemmung verbunden ist. Die Befestigungsvorrichtung kann über eine vorgesehene Schnittstelle, beispielsweise eine Bohrung, mit einem Verbindungselement einer Maschine verbunden werden. Nachteiliger Weise erfolgt die Kraftübertragung zwischen der Befestigungsvorrichtung und dem Verbindungselement der Maschine punktuell über eine geringe Fläche. Hierdurch entsteh eine lokal hohe Belastung bzw. eine hohe Flächenpressung in dem Verbindungselement. Eine Verringerung der Flächenpressung, wodurch eine größere Kraftübertragung ermöglicht wird, kann nur durch eine größere Ausführung des Verbindungselements als Schnittstelle zwischen der Befestigungsvorrichtung des Gurts und der Maschine, in welcher der Gurt verbaut wird, erfolgen. Hierdurch ergibt sich nachteiliger Weise wiederum ein erhöhter Bauraumbedarf.

Der Erfindung liegt daher die Aufgabe zugrunde, eine Befestigungsvorrichtung zur Anbindung eines Gurtes oder eines Gurtsegments an einer Maschine bereitzustellen, die den Zielkonflikt zwischen einer größtmöglichen Kraftübertragung und einem gleichzeitig geringen Bauraumbedarf zu lösen. Zusätzlich oder alternativ soll die durch die Befestigungsvorrichtung übertragbare Kraft vergrößert werden.

Die Lösung dieser Aufgabe ergibt sich durch eine Befestigungsvorrichtung mit den Merkmalen des unabhängigen Anspruchs 1. Eine weitere Lösung der Aufgabe ergibt sich durch ein Gurtsegment mit den Merkmalen des Anspruchs 3. Darüber hinaus ergibt sich die Lösung der gestellten Aufgabe durch einen Linearantrieb mit den Merkmalen des Anspruchs 7 sowie durch einen Gabelstapler mit den Merkmalen des Anspruchs 8.

Weitere vorteilhafte Ausbildungen sind in den abhängigen Ansprüchen offenbart, sowie der allgemeinen Beschreibung und den Ausführungsbeispielen zu entnehmen.

Die vorliegende Anmeldung betrifft eine Befestigungsvorrichtung zur Anbindung eines Gurtsegments an eine Maschine, aufweisend ein Verbindungselement und eine Aufnahmevorrichtung, wobei das Gurtsegment einen Grundkörper mit innerhalb des Grundkörpers in Längsrichtung verlaufenden und in Querrichtung parallel zueinander angeordneten Seilen aufweist, wobei die Seile aus wenigstens einem offenen Ende des Grundkörpers abschnittsweise herausragen. Das Verbindungselement weist einen Absatz und eine Klemmeinheit auf, wobei die Klemmeinheit mit zumindest einem Teil der Seile mittels Klemmung verbindbar ist. Die Aufnahmevorrichtung ist zur formschlüssigen Aufnahme des Verbindungselements ausgebildet. Die Aufnahmevorrichtung ist mehrteilig ausgebildet und weist wenigstens zwei miteinander verbindbare Schalen auf, wobei die Innenkontur der Schalen die Außenkontur des Verbindungselements aufweist, wobei die Schalen miteinander verbunden zur vollständigen formschlüssigen Aufnahme des Verbindungselements ausgebildet sind.

Der Erfindung liegt die Erkenntnis zugrunde, dass die Verbindung zwischen den Seilen eines Gurtes oder des Gurtsegments, die vorzugsweise als Stahlseile ausgebildet sind, und der Klemmeinheit, die vorzugsweise als metallischer Körper ausgebildet ist, durch Klemmung erfolgen kann. Hierzu können die Stahlseile in entsprechende Öffnungen des Absatzes und der Klemmeinheit eingeführt werden. Die Öffnungen der Klemmeinheit können anschließend von außen zusammengedrückt werden, sodass sich deren Durchmesser bzw. Querschnitt derartig verengt, dass eine kraftschlüssige Klemmverbindung zwischen der Klemmeinheit und den Seilen entsteht.

Vorteilhaft ist, dass das Gurtsegment auf diese Weise an einer Last, oder innerhalb einer Maschine oder dergleichen einfach und schnell montiert oder für einen Austausch des Gurtsegments wieder demontiert werden kann. Die Aufnahmevorrichtung kann unabhängig von dem Verschleiß des Gurtsegments wiederverwendet werden. Auf vorteilhafte Weise ist die Aufnahmevorrichtung zur vollständigen formschlüssigen Aufnahme des Verbindungselements ausgebildet. Mit anderen Worten umschließt die Aufnahmevorrichtung das Verbindungselement vollständig. Die Oberfläche der Außenkontur des Verbindungselements steht vollständig mit der Oberfläche der Innenkontur der Schalen der Aufnahmevorrichtung in Kontakt, sodass die gesamte Oberfläche des Verbindungselements zur formschlüssigen Kraftübertragung zwischen dem Verbindungselement und der Aufnahmevorrichtung dient. Insbesondere die Aufnahme des Absatzes in der Aufnahmevorrichtung kann eine Verankerung des Verbindungselements bzw. des damit verbundenen Gurtsegments in Richtung der Kraftübertragung in der Aufnahmevorrichtung gewährleisten. Die Kraftübertragung kann so über eine möglichst große Kraftübertragungsfläche zwischen dem Verbindungselement und der Aufnahmevorrichtung erfolgen, wodurch die Flächenpressung über die Oberfläche des Verbindungselements gleichmäßig verteilt wird. So kann das Verbindungselement bzw. die Befestigungsvorrichtung bei gleichbleibender Kraftübertragung insgesamt kompakter gebaut werden. Alternativ kann die Kraftübertragung der Befestigungsvorrichtung durch Vergrößerung der Kraftübertragungsfläche bei gleichbleibender Baugröße insgesamt vergrößert werden.

Gemäß einem weiteren Aspekt der vorliegenden Erfindung weist der Absatz und die Klemmeinheit eine Mehrzahl von Öffnungen zur Aufnahme der Seile auf. Auf vorteilhafte Weise kann die Lage bzw. die Ausrichtung der Seile durch die einzelnen Öffnungen vorbestimmt werden. Mit anderen Worten kann durch die einzelnen Öffnungen sichergestellt werden, dass die Seile in der Befestigungsvorrichtung in Kraftrichtung verlaufend angeordnet sind und sich beispielsweise beim Verpressen der Öffnungen der Klemmeinheit nicht verschieben können. So kann eine Belastung der Seile in deren Vorzugsrichtung, d.h. in Längsrichtung, sichergestellt werden.

Die vorliegende Erfindung betrifft außerdem ein Gurtsegment mit einer erfindungsgemäßen Befestigungsvorrichtung, wobei das Gurtsegment einen Grundkörper mit innerhalb des Grundkörpers in Längsrichtung verlaufenden und in Querrichtung parallel zueinander angeordneten Seilen aufweist. Die zuvor genannten Eigenschaften und Vorteile der Befestigungsvorrichtung lassen sich so auf die Anbindung eines Gurtsegments an einer Einrichtung oder Maschine übertragen. Das Gurtsegment kann bei bestimmungsgemäßer Verwendung zur Übertragung von einer Leistung und bzw. oder einer Bewegung zwischen einem Antriebsmotor und einem horizontal und bzw. oder vertikal beweglichen, linear verfahrbaren Schlitten angeordnet sein. Vorzugsweise ist das Gurtsegment in einem Mast eines Gabelstaplers oder eines Regalbediengeräts zwischen einem Antriebsmotor und einer Hubplattform verbaut.

Gemäß einem weiteren Aspekt der vorliegenden Erfindung weist der Grundkörper ein polymeres Material, vorzugsweise ein Polyurethan oder ein Elastomer auf.

Gemäß einem weiteren Aspekt der vorliegenden Erfindung ist das Gurtsegment ein Antriebsriemen. Antriebsriemen sind in verschiedensten Ausführungsformen bekannt. Eine beispielhafte Auswahl von Antriebsriemen stellen Zahnriemen zur formschlüssigen Kraftübertragung, sowie Keilriemen und bzw. oder Keilrippenriemen zur kraftschlüssigen Kraftübertragung dar.

Gemäß einem weiteren Aspekt der vorliegenden Erfindung weist der Antriebsriemen eine in Längsrichtung verlaufende Profilierung zur Führung des Antriebsriemens in Querrichtung auf. Eine zu der Profilierung des Antriebsriemens korrespondierende Profilierung kann in zumindest einer mit dem Antriebsriemen in Eingriff stehenden Riemenscheibe oder Umlenkrolle ausgebildet sein. Durch das Ineinandergreifen der Profilierung des Antriebsriemens mit der korrespondierenden Profilierung der Riemenscheibe oder Umlenkrolle kann ein seitliches Ablaufen des Antriebsriemens von der Riemenscheibe oder Umlenkrolle vermieden werden. Die Profilierung kann auf der kraftübertragenden Antriebsseite des Antriebsriemens oder auf der gegenüberliegenden Rückenseite des Antriebsriemens angeordnet sein. Im Falle eines Keilrippenriemens oder Keilriemens kann die rippenförmige Geometrie als solche allein die Führung des Antriebsriemens in Querrichtung gewährleisten.

Die vorliegende Erfindung betrifft außerdem einen Linearantrieb mit einem erfindungsgemäßen Gurtsegment. Insbesondere bei Linearantrieben für sicherheitsrelevante Anwendungen mit Anforderung an eine Auslegung mit hohen Sicherheitsfaktoren kann die erfindungsgemäße Lösung besonders vorteilhaft sein, da der Sicherheitsfaktor bei gleichbleibender Kraftübertragung höher ausfallen kann. Mit anderen Worten muss bei der erfindungsgemäßen Lösung die maximal zulässige Kraftübertragung nicht zugunsten der Erfüllung eines Sicherheitsfaktors eingeschränkt werden.

Weiterhin betrifft die vorliegende Erfindung einen Gabelstapler mit einem erfindungsgemäßen Linearantrieb. Die zuvor genannten Eigenschaften und Vorteile des erfindungsgemäßen Linearantriebs lassen sich auf die Anwendung in einem Gabelstapler übertragen.

Ausführungsbeispiele und weitere Vorteile der Erfindung werden nachstehend im Zusammenhang mit den folgenden Figuren schematisch dargestellt und näher erläutert.

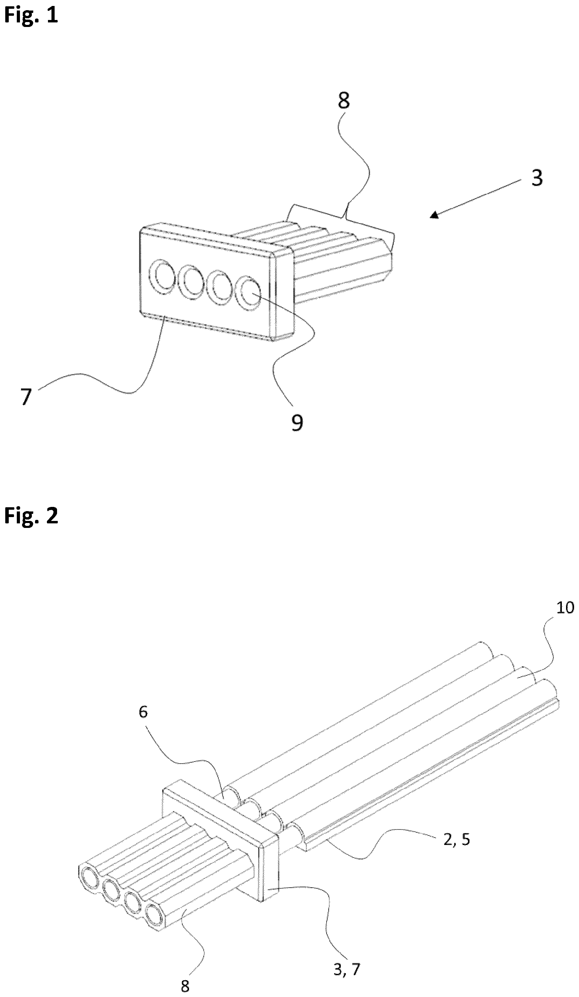

Darin zeigt Fig. 1 eine perspektivische schematische Darstellung eines Verbindungselements einer erfindungsgemäßen Befestigungsvorrichtung.

Fig. 2 zeigt eine perspektivische schematische Darstellung eines erfindungsgemäßen Gurtsegments bzw. Antriebsriemens mit dem Verbindungselement aus Fig. 1.

Fig. 3 zeigt eine schematische Darstellung des Gurtsegments bzw. Antriebsriemens aus Fig. 2 in einer Draufsicht, wobei das Verbindungselement in eine Schale einer Aufnahmevorrichtung eingelegt ist.

Die Beschreibung der o.g. Figuren erfolgt in kartesischen Koordinaten mit einer Längsrichtung X, einer zur Längsrichtung X senkrecht ausgerichteten Querrichtung Y sowie einer sowohl zur Längsrichtung X als auch zur Querrichtung Y senkrecht ausgerichteten vertikalen Richtung Z. Die Längsrichtung X kann auch als Tiefe X, die Querrichtung Y auch als Breite Y und die vertikale Richtung Z auch als Höhe Z bezeichnet werden. Die Längsrichtung X und die Querrichtung Y bilden gemeinsam die Horizontale, X, Y, welche auch als horizontale Ebene X, Y bezeichnet werden kann. Die Längsrichtung X, die Querrichtung Y und die vertikale Richtung Z können gemeinsam auch als Raumrichtungen X, Y, Z bzw. als kartesische Raumrichtungen X, Y, Z bezeichnet werden.

Ein in Figur 1 dargestelltes Verbindungselement 3 weist einen ersten Teilbereich auf, der als Absatz 7 bezeichnet wird. Dem Absatz 7 schließt sich ein zweiter Teilbereich an, der als Klemmeinheit 8 bezeichnet wird. Vorzugsweise ist der Absatz 7 mit der Klemmeinheit 8 einteilig, d.h. massiv aus einem Körper gefertigt. Der Absatz 7 und die Klemmeinheit 8 weisen eine Mehrzahl von Öffnungen 9 auf. Die Öffnungen 9 sind als Bohrungen 9 ausgebildet, die in einer Ebene nebeneinander beabstandet angeordnet sind.

Fig. 2 zeigt eine perspektivische schematische Darstellung eines erfindungsgemäßen Gurtsegments 2 mit dem Verbindungselement 3. Das Gurtsegment 2 ist als ein Antriebsriemen 2 ausgebildet und weist einen Grundkörper 5 aus einem elastomeren Material mit in Längsrichtung X verlaufenden und in Querrichtung Y parallel zueinander angeordneten Seilen 6 aus Stahl auf. Die Seile 6 ragen aus wenigstens einem offenen Ende des Grundkörpers 5 abschnittsweise heraus. Dieser Bereich der Seile 6 wird zur Anbindung des Antriebsriemens 2 an das Verbindungselement 3 verwendet, indem dieser Bereich der Seile 6 in die Öffnungen 9 des Verbindungselements 3 eingeführt und dort durch Verformen der Klemmeinheit 8 eingeklemmt wird. Die in dem Verbindungselement 3 angeordneten Bohrungen 9 dienen jeweils zur Aufnahme eines Seils 6 des Antriebsriemens 2. Zur Verbindung der Klemmeinheit 8 mit den Seilen 6 kann auf die Klemmeinheit 8 von außen eine Kraft ausgeübt werden, sodass sich der Durchmesser bzw. Querschnitt der Öffnungen 9 derartig verengt, dass eine kraftschlüssige Klemmverbindung zwischen der Klemmeinheit 8 und den Seilen 6 entsteht. Der Antriebsriemen 2 weist eine in Längsrichtung X verlaufende Profilierung 10 zur Führung des Antriebsriemens 2 in Querrichtung Y in Zusammenwirken mit einer nicht dargestellten Riemenscheibe oder Umlenkrolle auf.

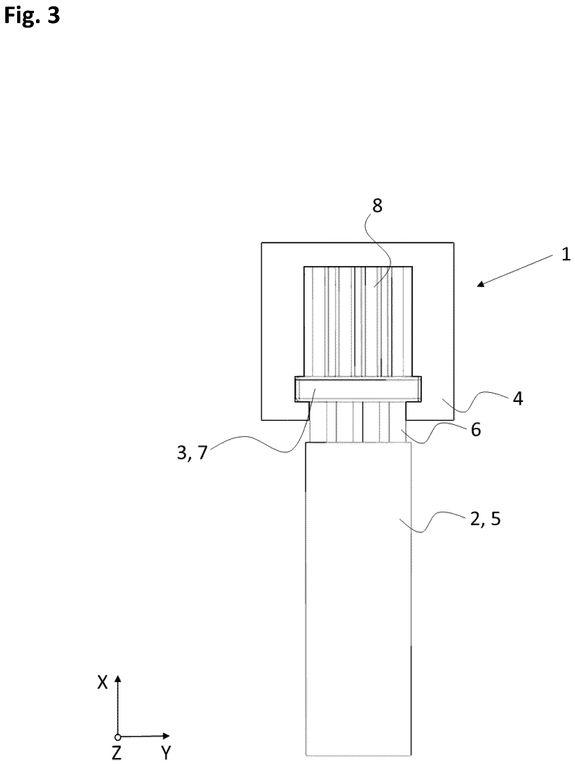

Fig. 3 zeigt eine schematische Darstellung des Gurtsegments 2 bzw. Antriebsriemens 2 aus Fig. 2 in einer Draufsicht, wobei das Verbindungselement 3 in eine Schale einer Aufnahmevorrichtung 4 eingelegt ist. Zur schematischen Darstellung ist die Aufnahmevorrichtung 4 in der Darstellung der Figur 3 im Schnitt der Ebene X, Y in Form einer ersten Halbschale dargestellt. Die Innenkontur der Aufnahmevorrichtung 4 bzw. der Schale weist die Außenkontur des Verbindungselements 3 auf. Durch Verschließen der Aufnahmevorrichtung 4 durch eine zweite Halbschale wird das Verbindungselement 3 vollständig formschlüssig durch die Aufnahmevorrichtung 4 aufgenommen. Die Oberfläche der Außenkontur des Verbindungselements 3 steht vollständig mit der Oberfläche der Innenkontur der Schalen der Aufnahmevorrichtung 4 in Kontakt, sodass die gesamte Oberfläche des Verbindungselements 3 zur formschlüssigen Kraftübertragung zwischen dem Verbindungselement 3 und der Aufnahmevorrichtung 4 dient. Die Kraftübertragung kann so über eine möglichst große Kraftübertragungsfläche erfolgen, wodurch die Flächenpressung über die Oberfläche des Verbindungselements 3 gleichmäßig verteilt wird. Insbesondere die Aufnahme des Absatzes 7 in der Aufnahmevorrichtung 4 gewährleistet eine Verankerung des Verbindungselements 3 bzw. des damit verbundenen Antriebsriemens 2 in der Aufnahmevorrichtung 4 in Längsrichtung X, die der Richtung entspricht, in der die Kraftübertragung zumindest im Wesentlichen erfolgt.

### Bezugszeichenliste (Teil der Beschreibung)

- 1: Befestigungsvorrichtung
- 2: Gurtsegment, Antriebsriemen
- 3: Verbindungselement
- 4: Aufnahmevorrichtung
- 5: Grundkörper
- 6: Seil
- 7: Absatz
- 8: Klemmeinheit
- 9: Öffnung, Bohrung
- 10: Profilierung

- X: Längsrichtung; Tiefe
- Y: Querrichtung; Breite
- Z: vertikale Richtung; Höhe
- X, Y: Horizontalen; horizontale Ebene

## Patentansprüche

1. Befestigungsvorrichtung (1) zur Anbindung eines Gurtsegments (2) an eine Maschine, aufweisend ein Verbindungselement (3) und eine Aufnahmevorrichtung (4), wobei das Gurtsegment (2) einen Grundkörper (5) mit innerhalb des Grundkörpers (5) in Längsrichtung (X) verlaufenden und in Querrichtung (Y) parallel zueinander angeordneten Seilen (6) aufweist, wobei die Seile (6) aus wenigstens einem offenen Ende des Grundkörpers (5) abschnittsweise herausragen, wobei das Verbindungselement (3) einen Absatz (7) und eine Klemmeinheit (8) aufweist, wobei die Klemmeinheit (8) mit zumindest einem Teil der Seile (6) mittels Klemmung verbindbar ist, wobei die Aufnahmevorrichtung (4) zur formschlüssigen Aufnahme des Verbindungselements (3) ausgebildet ist,
**dadurch gekennzeichnet, dass**
die Aufnahmevorrichtung (4) mehrteilig ausgebildet ist und wenigstens zwei miteinander verbindbare Schalen aufweist, wobei die Innenkontur der Schalen die Außenkontur des Verbindungselements (3) aufweist, wobei die Schalen miteinander verbunden zur vollständigen formschlüssigen Aufnahme des Verbindungselements (3) ausgebildet sind.

2. Befestigungsvorrichtung (1) nach Anspruch 1,
**dadurch gekennzeichnet, dass**
Absatz (7) und die Klemmeinheit (8) eine Mehrzahl von Öffnungen (9) zur Aufnahme der Seile (6) aufweisen.

3. Gurtsegment (2) mit einer Befestigungsvorrichtung (1) nach einem der Ansprüche 1 bis 2, wobei das Gurtsegment (2) einen Grundkörper (5) mit innerhalb des Grundkörpers (5) in Längsrichtung (X) verlaufenden und in Querrichtung (Y) parallel zueinander angeordneten Seilen (6) aufweist.

4. Gurtsegment (2) nach Anspruch 3, wobei der Grundkörper (5) ein polymeres Material, vorzugsweise ein Polyurethan oder ein Elastomer, aufweist.

5. Gurtsegment (2) nach einem der Ansprüche 3 oder 4, wobei das Gurtsegment (2) ein Antriebsriemen (2) ist.

6. Gurtsegment (2) nach Anspruch 5, wobei der Antriebsriemen (2) eine in Längsrichtung (X) verlaufende Profilierung (10) zur Führung des Antriebsriemens in Querrichtung (Y) aufweist.

7. Linearantrieb mit einem Gurtsegment (2) nach einem der Ansprüche 3 bis 6.

8. Gabelstapler mit einem Linearantrieb nach Anspruch 7.
